(19) **Europäisches Patentamt**

**European Patent Office**

**Office européen des brevets**

(11) **EP 1 281 932 A2**

(12) **EUROPÄISCHE PATENTANMELDUNG**

(43) Veröffentlichungstag:
05.02.2003 Patentblatt 2003/06

(51) Int Cl.⁷: **G01B 11/00**

(21) Anmeldenummer: 02015162.7

(22) Anmeldetag: 06.07.2002

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **10.07.2001 DE 10132769**

(71) Anmelder: **Scheibner u. Schäfer GbR**
**38126 Braunschweig (DE)**

(72) Erfinder:
• **Scheibner, Bernd**
**38162 Schulenrode (DE)**
• **Schäfer, Rainer**
**38312 Cramme (DE)**

(74) Vertreter: **Lins, Edgar, Dipl.-Phys. Dr.jur. et al**
**GRAMM, LINS & PARTNER**
**Theodor-Heuss-Strasse 1**
**38122 Braunschweig (DE)**

(54) **Verfahren und Messeinrichtung zur Vermessung eines Zweiradrahmens**

(57) Zur Vermessung eines Zweiradrahmens bei dem ein im wesentlichen U-förmiger Messbügel (12) mit zwei Schenkeln (13) und einem oberen Querhaupt (14) zentriert in eine senkrecht zur Längsachse stehende Aufnahmebohrung (5) eingesetzt und in eine fixierte Winkellage gebracht wird, eine optisch wirksame Komponente (9) in einer definierten Position relativ zur Lenkachse (2) des Zweiradrahmens befestigt wird und mit einem Strahlengang zwischen dem Messbügel (12) und der optisch wirksamen Komponente (9) eine relative Lage zwischen dem Messbügel (12) und der optischen Komponente (9) festgestellt wird, ist vorgesehen, dass die optisch wirksame Komponente (9) spielfrei, aber drehbar mit einem höhenverstellbaren und mit einer ersten Skala versehenen Einsatz (7) in den Steuerkopf (1) befestigt wird, das Querhaupt (14) mit einer horizontalen Markierung (18) und einer mittigen horizontalen zweiten Skala (17) versehen ist, das Querhaupt mit einer optisch wirksamen Oberfläche (16) versehen ist, deren Abstand von einer parallel zu dieser Oberfläche durch die Mitte der Aufnahmebohrung (5) verlaufenden Ebene (20) definiert ist, die optische Komponente (9) mit einer Markierung versehen ist, die eine mechanische Abstandsmessung zu einer Markierung (18) des Messbügels (12) erlaubt und deren Abstand zur optischen Achse (10) des Strahlengangs definiert ist, der Abstand der horizontalen Markierung (18) auf dem Querhaupt (14) des Messbügels (12) von der Mittenachse der Aufnahmebohrung (5) definiert ist und dass unter Verwendung der definierten konstanten Abmessungen mit mechanischen Messungen und optischen Bestimmungen die für die Vermessung benötigte Parameter ermittelt werden.

Fig. 1

EP 1 281 932 A2

**Beschreibung**

Die Erfindung betrifft ein Verfahren zur Vermessung eines Zweiradrahmens, bei dem ein im wesentlichen U-förmiger Messbügel mit zwei Schenkeln und einem oberen Querhaupt zentriert in eine senkrecht zur Längsachse stehende Aufnahmebohrung eingesetzt und in eine fixierte Winkellage gebracht wird, eine optisch wirksame Komponente in einen Steuerkopf des Zweiradrahmens eingesetzt wird und mit einem Strahlengang zwischen dem Messbügel und der optisch wirksamen Komponente eine relative Lage zwischen dem Messbügel und der optischen Komponente festgestellt wird.

Die Erfindung betrifft ferner eine Messeinrichtung zur Vermessung eines Zweiradrahmens, mit einem in einer zentrierbaren und in einer festen Winkellage fixierbaren, im wesentlichen U-förmigen Messbügel aus zwei Schenkeln und einem oberen Querhaupt, und mit einer in einen Steuerkopf des Zweiradrahmens einsetzbaren optisch wirksamen Komponente zur Ausbildung eines Strahlengangs zwischen dem Messbügel und der optisch wirksamen Komponente.

Es sind zahlreiche derartige Verfahren und Messeinrichtungen bekannt.

EP 0 491 369 B1 offenbart eine in den Steuerkopf eingesetzte Schiene, deren Längsachse sich senkrecht zur Richtung der Längsachse erstreckt. Auf der Schiene ist ein Lasergerät verschiebbar, das mit am Bügel angebrachten Reflektoren zusammenwirkt.

Gemäß EP 0 704 671 A2 sind in das Querhaupt des Messbügels im Bereich der Schenkel Bildaufnehmer eingesetzt, die auf eine in den Steuerkopf eingesetzte Anordnung mit zwei axial untereinander angeordneten Kugeln gerichtet ist. Durch photogrammetrische Auswertungsmethoden lässt sich der Verbindungsvektor zwischen den beiden Kugeln eindeutig ermitteln, sodass die relative Lage der Steuerkopfachse zu der Befestigungsachse des Bügels feststellbar ist.

Den bekannten Verfahren und Vorrichtungen ist gemeinsam, dass die Ermittlung der Daten des Zweiradrahmens ausschließlich aufgrund der optischen Messungen erfolgt. Die bekannten Anordnungen sind relativ aufwendig, sodass ihre Anschaffung in kleineren Werkstätten wirtschaftlich nicht möglich ist. Eine an sich erforderliche Vermessung eines bei einem Unfall möglicherweise beschädigten Zweiradrahmen unterbleibt daher aus wirtschaftlichen Gründen häufig und führt zu einer Gefährdung des Benutzers des Zweirades, insbesondere Motorrades.

Die Erfindung geht von der Problemstellung aus, eine Vermessung eines Zweiradrahmens auch mit einer einfacheren und preisgünstigeren Vorrichtung zu ermöglichen.

Ausgehend von dieser Problemstellung ist erfindungsgemäß das eingangs erwähnte Verfahren zur Vermessung eines Zweiradrahmens dadurch gekennzeichnet, dass die optisch wirksame Komponente spielfrei, aber drehbar mit einem höhenverstellbaren und mit einer ersten Skala versehenen Einsatz in den Steuerkopf eingesetzt wird, das Querhaupt mit einer horizontalen Markierung und einer mittigen horizontalen zweiten Skala versehen ist, das Querhaupt mit einer optisch wirksamen Oberfläche versehen ist, deren Abstand von einer parallel zu dieser Oberfläche durch die Mitte der Aufnahmebohrung verlaufenen Ebene definiert ist, die optische Komponente mit einer Markierung versehen ist, die eine mechanische Abstandsmessung zu einer Markierung des Messbügels erlaubt und deren Abstand zur optischen Achse des Strahlengangs definiert ist, der Abstand der horizontalen Markierung auf dem Querhaupt des Messbügels von der Mittenachse der Aufnahmebohrung definiert ist und dass unter Verwendung der definierten konstanten Abmessungen mit mechanischen Messungen und optischen Bestimmungen die für die Vermessung benötigten Parameter ermittelt werden.

Das erfindungsgemäße Verfahren sieht somit eine Auswertung der benötigen optischen Messungen mit Daten vor, die sich aus definierten konstanten Abmessungen der Vorrichtung und aus mechanischen Messungen, insbesondere Längenmessungen, ergeben. Unter Ausnutzung der konstanten Abmessungen und der mechanisch mit ausreichender Genauigkeit erhältlichen Messungen kann somit der Aufwand für die optischen Messungen gering gehalten werden, wodurch eine einfache und preisgünstige Vorrichtung zum Vermessen des Zweiradrahmens ermöglicht wird.

Insbesondere zur Durchführung des erfindungsgemäßen Verfahrens ist erfindungsgemäß die Messeinrichtung der eingangs erwähnten Art dadurch gekennzeichnet, dass die optisch wirksame Komponente spielfrei, aber drehbar mit einem höhenverstellbaren und mit einer ersten Skala versehenen Einsatz in den Steuerkopf eingesetzt ist, das Querhaupt mit einer horizontalen Markierung und einer mittigen horizontalen zweiten Skala versehen ist, das Querhaupt mit einer optisch wirksamen Oberfläche versehen ist, deren Abstand von einer parallel zu dieser Oberfläche durch die Mitte der Aufnahmebohrung verlaufenen Ebene definiert ist, die optische Komponente mit einer Markierung versehen ist, die eine mechanische Abstandsmessung zu einer Markierung des Messbügels erlaubt und deren Abstand zur optischen Achse des Strahlengangs definiert ist und der Abstand der horizontalen Markierung auf dem Querhaupt des Messbügels von der Mittenachse der Aufnahmebohrung definiert ist.

Vorzugsweise ist ferner an der optischen Komponente eine weitere Markierung vorgesehen, die sich in einem definierten Abstand zum Nullpunkt der ersten Skala befindet und deren Abstand zur optischen Achse in Skalenrichtung definiert ist.

Der Strahlengang wird in einer bevorzugten Ausführungsform durch ein als optische Komponente eingesetztes Fernrohr definiert, das auf unterschiedliche Entfernungen fokussierbar ist und vorzugsweise ein Fadenkreuz zur Mittenbestimmung aufweist.

Alternativ hierzu kann der Strahlengang auch von einer Laserquelle ausgehen, die als Strich- oder Kreuzlaser ausgebildet sein kann.

Insbesondere für eine Laserlichtquelle kann es vorteilhaft sein, wenn die zweite Skala mit einem verschiebbaren Nonius ausgebildet wird und der verschiebbare Nonius eine Kreuzmarkierung aufweist.

Das erfindungsgemäße Verfahren und die erfindungsgemäßen Messeinrichtungen sind zur Bestimmung der üblichen Parameter eines Zweiradrahmens geeignet, nämlich zur Bestimmung der Rahmenlänge, des Rahmenwinkels, der Sturzabweichung und des Lenkkopfversatzes. Darüber hinaus ist auch die Vermessung der Heckverdrehung und des Heckversatzes möglich.

In einer bevorzugten Ausführungsform wird zur Bestimmung der Rahmenlänge und des Rahmenwinkels der von der optischen Komponente ausgehende Strahlengang in Höhe der horizontalen Markierung des Messbügels auf die optisch wirksame Oberfläche gerichtet und der Auftreffpunkt des von der optisch wirksamen Oberfläche reflektierten Strahls auf der ersten Skala abgelesen und in Verbindung mit der mechanischen Längenmessung zwischen der Markierung der optischen Komponente und der horizontalen Markierung des Messbügels ausgewertet.

Zur Bestimmung der Sturzabweichung wird die optische Komponente auf beide Seiten des Messbügels durch eine Höheneinstellung der optischen Komponente auf die horizontale Markierung gerichtet und die jeweilige Höheneinstellung auf der ersten Skala abgelesen und die Differenz in Beziehung zum Abstand der Messpunkte auf den beiden Seiten gesetzt.

Zur Bestimmung eines Lenkkopfversatzes wird eine Mittenabweichung des Nullpunktes der zweiten Skala ermittelt, in dem die optische Komponente auf die Mitte der ersten Skala und anschließend durch Höhenverschieben der optischen Komponente auf die zweite Skala gerichtet und der Auftreffpunkt auf der zweiten Skala abgelesen wird, wobei der abgelesene Wert durch eine Messung der außermittigen Befestigung des Messbügels und unter Berücksichtigung einer festgestellten Sturzabweichung korrigiert wird.

Die Erfindung und die Ermittlung der Vermessungsparameter wird im folgenden anhand eines in der Zeichnung dargestellten Ausführungsbeispiels und von beispielhaften Auswertungen näher erläutert. Es zeigen:

Figur 1 - eine Seitenansicht einer erfindungsgemäßen Vorrichtung in montierter Position mit eingezeichneten Abmessungen und Messwerten, die für die Bestimmung der Parameter verwendet werden,

Figur 2 - eine Draufsicht der Anordnung gemäß Figur 1,

Figur 3 - eine Frontansicht der Anordnung gemäß Figur 1,

Figur 4 - eine Seitenansicht analog Figur 1 für eine Ausführungsform mit einem Laserkopf,

Figur 5 - eine Ansicht eines Messbügels in einem Eckbereich mit einem auf einer Noniusverstellung angeordneten Zielfadenkreuz.

Der in der Zeichnung nur schematisch dargestellte Rahmen besteht aus einem rohrförmigen Steuerkopf 1, dessen Längsachse eine Lenkachse 2 definiert. Der Steuerkopf 1 ist mit einem Hauptrohr 3 des Rahmens verbunden, das in dem dargestellten Ausführungsbeispiel nach unten gekrümmt ausgebildet ist und in einer Schwingenlagerung 4 mit einer Aufnahmebohrung 5 endet.

In den Steuerkopf 1 ist mit Zentrierkegeln 6 ein Einsatz 7 in Richtung der Lenkachse 2 eingesetzt, in dem eine Stange 8 verschiebbar, d.h. höhenverstellbar, gelagert ist. Am oberen Ende der Stange 8 ist ein Fernrohr 9 befestigt, dessen optische Achse 10 fixiert senkrechte zur Lenkachse 2 steht. Das Fernrohr 9 ist somit in dem Steuerkopf 1 spielfrei, aber drehbar und höhenverstellbar gelagert. Eine obere Kante 11 des Gehäuses des Fernrohres 9 ist plan und in einem definierten Abstand zur optischen Achse 10 ausgebildet, sodass sie als Markierung für die Durchführung einer Längenmessung dienen kann. Auf der planen Kante 11 des Gehäuses ist ferner eine (nicht dargestellte) Markierung senkrecht zur optischen Achse 10 und senkrecht zur Lenkachse 2 angeordnet, deren Abstand von einem Fadenkreuz des Fernrohres 9 ebenfalls definiert und bekannt ist. Diese Markierung schneidet vorzugsweise die Lenkachse 2 (gleich Längsachse der Stange 8).

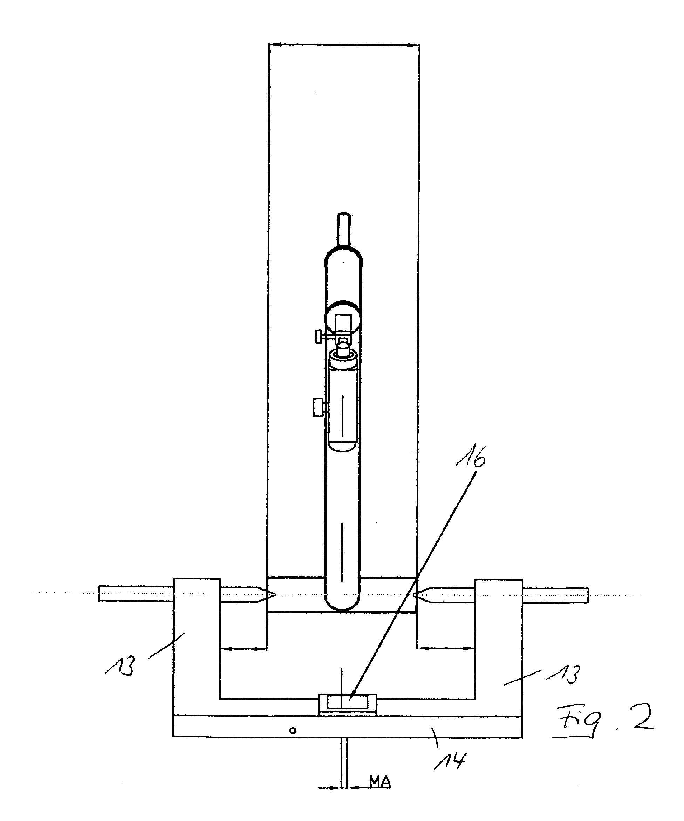

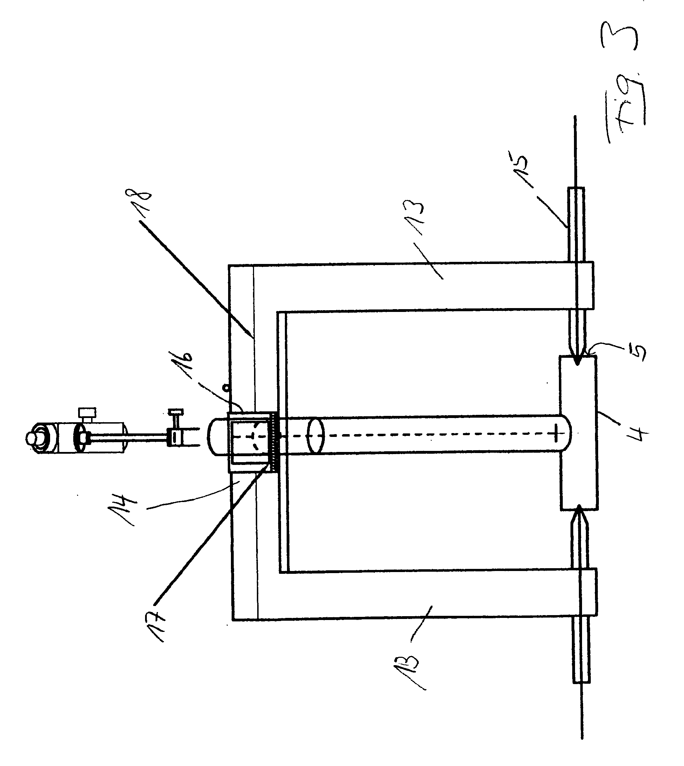

In die Aufnahmebohrung 5 der Schwingenlagerung 4 ist ein im wesentlichen U-förmiger Messbügel 12 eingesetzt, der aus zwei seitlichen Schenkeln 13 und einem oberen Querhaupt 14 besteht (Figuren 2, 3). Der Messbügel 12 ist mit Zentrierdornen 15 in die Aufnahmebohrung der Schwingenlagerung 4 beidseitig eingesetzt und nach Augenmaß etwa mittig ausgerichtet. In der Mitte des Querhaupts 14 ist ein rechteckiger Spiegel 16 befestigt, der an seiner unteren Kante eine zweite Skala 17 trägt. Das Querhaupt 14 ist ferner mit einem durchgehenden Anriss 18 als horizontale Markierung versehen.

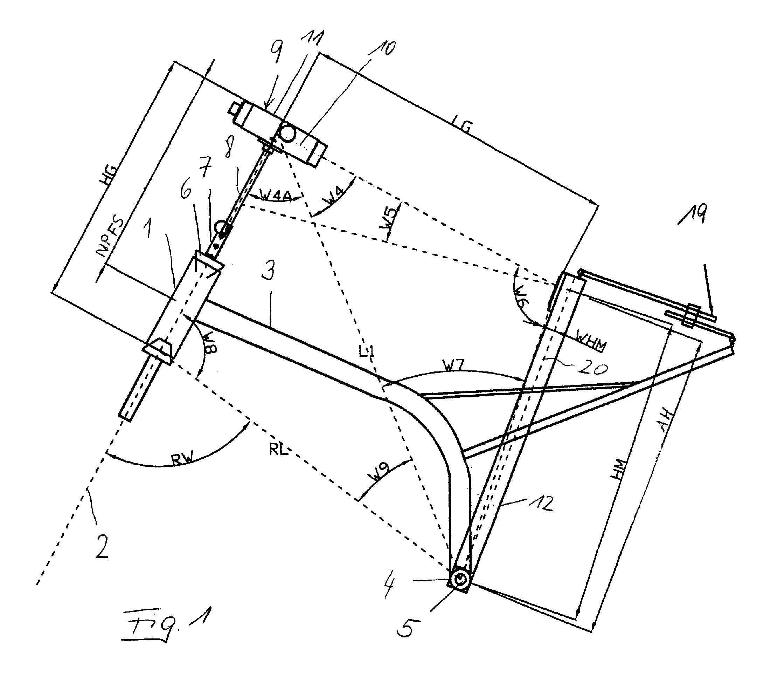

Wie Figur 1 verdeutlicht, ist der Bügel 12 in einer vorgegebenen Winkelposition durch eine einstellbare Bügelabstützung 19 fixiert. Die Bügelabstützung 19 stützt sich ihrerseits an dem Rahmenrohr 3 ab. Der Messbügel 12 wird so fixiert, dass er etwas geneigt zur Lenkachse 2 verläuft.

In Figur 1 sind Hilfslinien und Längenangaben eingezeichnet, die für die Ermittlung der benötigen Messparameter von Bedeutung sind. Durch die Anordnung vorgegebene und definiert ermittelte Konstantwerte sind:

Anrisshöhe (AH)

Die Anrisshöhe AH ergibt sich aus dem Abstand des Anrisses 18 auf der Oberfläche des Querhaupts 14 des Messbügels 12, projiziert auf die Mittenebene 20 des Messbügels 12 zur Mitte der Aufnahmebohrung 5.

Bügelstärke (BS)

Von Bedeutung ist die halbe Bügelstärke, also der Abstand der Oberfläche, auf dem sich der Anriss 18 befindet, zur Mittenebene 20 des Bügels. Voraussetzung ist dabei, dass die Zentrierdornen 15 mittig, also mit ihrer Achse in der Mittenebene 20 liegend, angeordnet sind.

Abstand Oberkante 11 zur optischen Achse 10.

Nullpunkt Fernrohrskala (NPFS)

Der Nullpunkt der Fernrohrskala (NPFS) kann an der Oberkante 11 des Fernrohres 9 liegen oder einen definierten Abstand von der Oberkante 11 aufweisen. Aufgrund des definierten Abstandes der Oberkante 11 von der optischen Achse 10 befindet sich die erste Skala auf der Stange 8 des Fernrohres 9 in einer definierten Lage zur optischen Achse 10.

Spiegelstärke (TS)

Die Spiegelstärke TS gibt den Abstand der Oberfläche des Spiegels 16 von der Oberfläche des Querhaupts 14 des Messbügels 12 an.

Definiert und bekannt ist ferner der Abstand des Anrisses 18 zur zweiten Skala 17 unter dem Spiegel.

Für die Auswertung werden folgende Messwerte ermittelt:

a) Höhe der ersten Skala (Skala 1)

Das Fernrohr wird zur Mitte des Messbügels 12, also zur Mitte des Spiegels 16, verschwenkt und die Schärfe so eingestellt, dass die erste Skala, also die Skala der Höhenverstellung des Fernrohrs 9 sichtbar sind. Der am horizontalen Hauptfaden des Fadenkreuzes liegende Wert wird abgelesen und notiert ("Höhe Skala 1"). Die Ablesung ist mit einer Ablesegenauigkeit von 0,5 mm möglich.

b) Abstand Fernrohr-Spiegel (LG)

In der Position, in der die Höhe der Skala 1 ermittelt worden ist, erfolgt eine Längenmessung von der Markierung (Anriss) auf der Oberkante 11 von der dort vorhandenen Markierung (Anriss) bis zur Höhe des Anrisses 18 auf dem Spiegel 16.

c) Aufbauhöhe (HG)

In der unveränderten Position des Fernrohrs 9 wird die Aufbauhöhe ermittelt als Längenmaß der Unterkante des Lenkkopfes 1 zur Oberkante 11 des Fernrohres 9. Auch hier beträgt die Ablesegenauigkeit 0,5 mm.

d) Höhe links (HFLI)

Das Fernrohr wird auf die in Fahrtrichtung links liegende Bügelseite verschwenkt, die Optik so scharf gestellt, dass der Anriss 18 zu erkennen ist. Dann wird durch Verstellen der Höhe des Fernrohres 9 die Höhe des Fadenkreuzes eingestellt, bis der Hauptfaden auf dem Anriss 18 liegt. Am Nonius wird der Wert abgelesen (Ablesegenauigkeit 0,05 mm) und notiert.

e) Höhe rechts (HFRE)

In gleicher Weise wird nach Verschwenken des Fernrohres 9 auf die in Fahrtrichtung rechts liegende Bügelseite die Höhe rechts mit einer Ablesegenauigkeit von 0,05 mm ermittelt und notiert.

f) Abstand links (AbstLi)

Da der Bügel nur nach Augenmaß mittig aufgesetzt wird, wird auf der in Fahrtrichtung links liegenden Bügelseite der Abstand der Zentrierwellenaufnahme zu den seitlichen Rahmenflächen in Höhe der Aufnahmebohrung 5 ermittelt. Dies kann mit einem Stahlmaß oder Messschieber geschehen. Die Ablesegenauigkeit beträgt 0,5 mm. Der Wert wird notiert.

g) Abstand rechts (AbstRe)

In gleicher Weise wird in Fahrtrichtung rechts der Abstand der Bügelseite von der Zentrierwellenaufnahme im Bereich der Aufnahmebohrung 5 ermittelt und der Wert notiert.

h) Mittenabweichung (MA)

Das Fernrohr wird zur Bügelmitte, also zur Mitte des Spiegels 16 verschwenkt, und die Schärfe so eingestellt, dass die erste Skala der Höhenverstellung sichtbar sind. Der vertikale Faden wird durch Verdrehen des Fernrohres auf die Skalenmitte der ersten Skala eingestellt. Durch Veränderung der Tiefenschärfe und Absenken des Fernrohres wird die zweite Skala 17 auf der Mitte des Querhaupts 14 des Messbügels 2 sichtbar. Die Höhe des Fernrohres 9 wird so justiert, dass der obere Rand der Skala 2 auf dem horizontalen Hauptfaden zu liegen kommt. Am vertikalen Hauptfaden des Fadenkreuzes ist nun die Mittenabweichung der zweiten Skala 17 mit dem Vorzeichen abzulesen (Ablesegenauigkeit 0,5 mm) und zu notieren.

Ermittlung der Rahmenlänge (RL)

Die Rahmenlänge RL ist durch den Abstand der Unterseite des Steuerkopfes 1 im Schnittpunkt mit der Lenkachse 2 zur Achse der Aufnahmebohrung 5 der Schwingenaufnahme 4 definiert. Die Rahmenlänge RL bildet mit der Diagonallänge L1 und der Lenkachse 2 bis zur Höhe der optischen Achse 10 ein Dreieck mit den Winkeln W4A, W8 und W9.
Aus dem Sinussatz ergibt sich, dass sich RL zu L1 wie SINW4A zu SINW8 verhält.

$$\text{Somit gilt RL} = L1*SIN\ (W4A)/SIN(W8) \tag{1}$$

L1 bildet andererseits mit der Verbindungslinie AM zwischen dem Mittelpunkt der Aufnahmebohrung 5 mit der Oberfläche des Spiegels 16 in Höhe des Anrisses 18 und dem gemessenen Abstand LG ein Dreieck mit den Winkeln W4, W6 und W7, wobei vorausgesetzt ist, dass die Oberfläche bzw. die spiegelnde Fläche des Spiegels 16 parallel zur Mittenebene 20 des Bügels liegt. Es ist aber auch möglich, die spiegelnde Fläche des Spiegels 16 mit der Mittenachse der Aufnahmebohrung 5 fluchten zu lassen, wodurch die spiegelnde Fläche unmittelbar mit dem Winkel W6 korrepsondiert.
Da LG gemessen ist gilt nach dem Kosinussatz $L1^2 = HM^2 + LG^2 - 2*AM*LG*COSW6$. Also:

$$L1 = WURZEL(POTENZ(HM;2) + POTENZ((LG);2) - 2*HM*(LG)*COS(W6) \tag{2}$$

HM ergibt sich aus der definierten Anrisshöhe AH nach dem Satz des Pythagoras zu

$$HM = WURZEL(POTENZ(AH;2) + POTENZ((BS/2 + TS);2)) \tag{3}$$

Für die Gleichung (2) wird noch der Winkel W6 benötigt. Dieser ergibt sich zu

$$W6 = 90° + WHM + W5/2. \tag{4}$$

Der Winkel WHM ist der Winkel zwischen der Verbindungslinie HM und der Anrisshöhe AH in der Mittenebene des Messbügels 12. Legt man diesen Winkel WHM an die Strecke HM in Höhe der optischen Achse 10 an, entsteht eine Parallele zur Mittenebene 20 des Messbügels 12 auf der Höhe der Spiegeloberfläche. Senkrecht zu dieser Ebene der Spiegeloberfläche steht eine Winkelhalbierende des Winkels W5, da sich der Winkel W5 aus der Reflektion eines Strahlengangs in der optischen Achse 10 an der Oberfläche des Spiegels 16 ergibt. Zu WHM+90° ist daher noch der /2 Winkel W5 zu addieren, um das Maß des Winkels W6 zu erhalten.

WHM errechnet sich im rechtwinkeligen Dreieck dadurch, dass TAN(WHM)BS/2 + TS/AH ist, sodass gilt

$$WHM = ARCTAN((BS/2 + TS/AH) \tag{5}$$

W5 ergibt sich aus der gemessenen Höhe der Skala 1 (Skala1) zu

$$W5 = ARCTAN((NPFS\text{-}Skala1\text{-}0,5*Fernr.\text{-}Durchm.)/(LG) \tag{6}$$

Damit sind alle Bestimmungen für die Gleichung (2) vorgenommen.
Für den Winkel W4A gilt

$$W4A = 90°\text{-}W4 \tag{7}$$

W4 ergibt sich zu

$$W4 = ARCSIN(HM/L1*SIN(W6)) \tag{8}$$

Da W6 bereits bestimmt ist (vgl. Gleichung (4)), ist nun auch W4 bekannt.
W8 bildet mit W9 und W4A die Winkel eines Dreiecks, also die Winkelsumme 180°. Somit gilt:

$$W8 = 180°\text{-}W4A\text{-}W9 \tag{9}$$

Da durch (2) und (7) L1 und W4A bekannt sind und die Länge HG und daraus die Länge der in der Lenkachse 2 liegenden Seite des Dreiecks zu HG-0,5 Fernr.-Durchm. bekannt ist, ergibt sich

$$W9 = ARCTAN((HG\text{-}0,5Fernr.\text{-}Durchm.\text{-}L1)/(HG\text{-}0,5Fernr.\text{-}Durchm. + L1)*1/$$

$$TAN(W4A/2) + 90\text{-}W4A/2 \tag{10}$$

Somit ist auch der Winkel W8 quantitativ bestimmt, sodass durch Einsetzen der durch (2), (7) und (9) ermittelten Werte die Rahmenlänge RL bestimmt ist.

Bestimmung Rahmenwinkel (RW)

Figur 1 verdeutlicht, dass gilt

$$RW = 180°\text{-}W8 \tag{11}$$

W8 ist durch (9) bekannt, sodass auch RW bekannt ist.

Ermittlung der Sturzabweichung

Die Sturzabweichung ergibt sich aus den Messwerten HFLI und HFRE bezogen auf den Abstand der Messpunkte auf dem Querhaupt 14 des Messbügels 12. Zweckmäßigerweise wird der Bügelrand als Messmarke für beide Messungen benutzt, sodass der "Skalenabstand" der konstruktiven Bügelbreite entspricht, die bekannt ist.

Es gilt:

$$\text{Sturzabweichung}) = \text{ARCTAN}((\text{HFLI-HFRE})/\text{Skalenabstand}) \tag{12}$$

Ermittlung des Lenkkopfversatzes

Der Lenkkopfversatz stellt den seitlichen Abstand des Steuerkopfes 1 in einer zur Längsebene des Fahrzeugs parallelen Ebene zur Mitte der Schwingenaufnahme dar.

Als Konstantwerte gilt daher die außermittige Montage des Messbügels 12 ein (AbstLi und AbstRe). Für den Lenkkopfversatz LKV gilt:

$$\text{LKV} = \text{MA} + \text{KORR-AbstLi}/2 + \text{AbstRe}/2 \tag{13}$$

Der Korrekturwert KORR ergibt sich zu KORR=(HG-Abst.-AnrissMA-Fernr.

$$\text{Durchm.}/2\text{-HF}/2^*\text{SIN(Sturzabweichung)} \tag{14}$$

Dabei ist

$$\text{HF} = \text{NPFS-Skla1-0,5}^*\text{Fernr.-Durchm.} \tag{15}$$

Durch Einsetzen von (14) und (15) in (13) ergibt sich der zu ermittelnde Lenkkopfversatz LKV.

Die Messgenauigkeiten ergeben sich für die Rahmenlänge zu ca. 0,5 mm, für den Rahmenwinkel zu etwa 0,05° und für die Sturzabweichung zu ca. 0,02°.

Die ermittelten Ergebnisse können, wie auch bei den anderen Messverfahren, in die von den Herstellern gelieferten Koordinatensysteme umgerechnet und damit direkt verwertet werden.

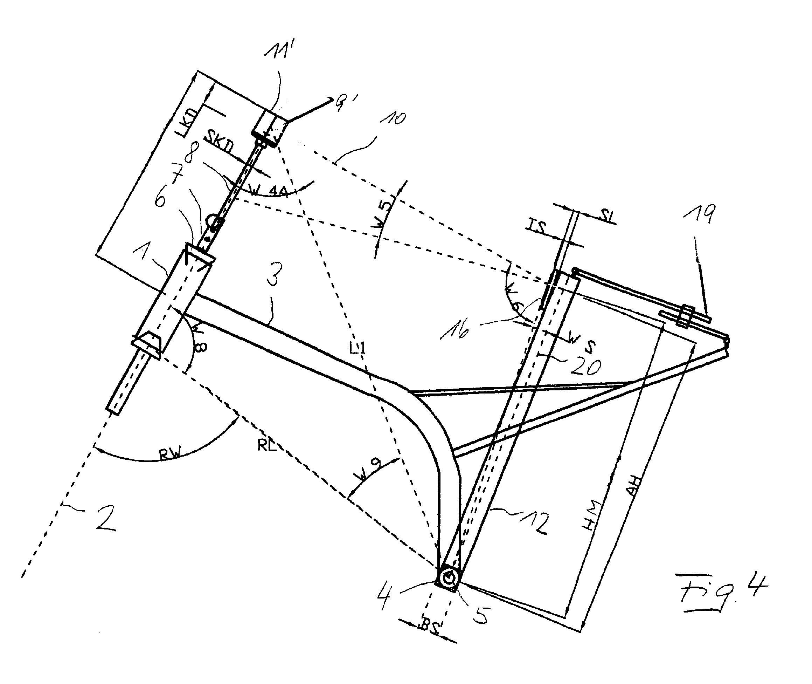

Bei dem in Figur 4 dargestellten Ausführungsbeispiel ist das Fernrohr 9 durch einen Laserkopf 9' ersetzt. Das Gehäuse des Laserkopfs 9' ist mit einer oberen Kante 11' versehen, die in dem definierten Abstand zur optischen Achse 10 angeordnet ist.

Die Auswertung der Messungen erfolgt mit dem Laserstrahl in analoger Weise zu der Beschreibung gemäß Figuren 1 bis 3.

Figur 4 enthält ferner die Variante, das der Spiegel 16 nicht parallel zur Mittenebene 20 des Bügels 12 ausgerichtet ist, sondern in einem Winkel WS, sodass die Spiegelebene durch die Mitte der Aufnahmebohrung 5 hindurch verläuft. Die bei der Anordnung gemäß Figur 1 erforderliche Korrektur zur Ermittlung des Winkels W6 kann daher entfallen.

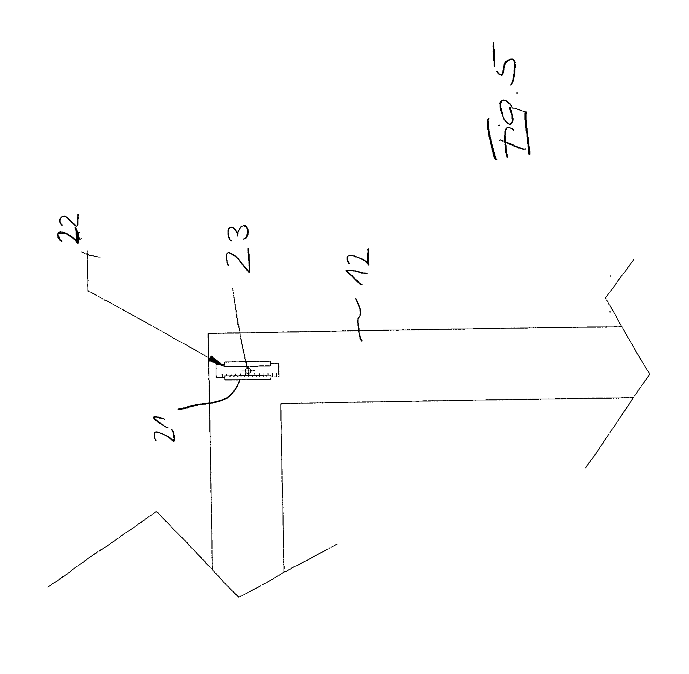

Figur 5 zeigt, dass der Rahmen 12 mit einer über einen Nonius 21 verstellbaren Skala 22 an beiden Ecken ausgebildet ist, wobei die Skala jeweils mit einem Zielfadenkreuz 23 versehen ist. Auf diese Weise sind die erforderlichen Einstellungen und Maße sehr genau durchzuführen bzw. abzulesen. Diese Anordnung eignet sich insbesondere für die Ausbildung des Strahlenganges mit einem Laserkopf 9'.

**Patentansprüche**

**1.** Verfahren zur Vermessung eines Zweiradrahmens, bei dem ein im wesentlichen U-förmiger Messbügel (12) mit zwei Schenkeln (13) und einem oberen Querhaupt (14) zentriert in eine senkrecht zur Längsachse stehende Aufnahmebohrung (5) eingesetzt und in eine fixierte Winkellage gebracht wird, eine optisch wirksame Komponente (9) in einer definierten Position relativ zur Lenkachse (2) des Zweiradrahmens befestigt wird und mit einem Strahlengang zwischen dem Messbügel (12) und der optisch wirksamen Komponente (9) eine relative Lage zwischen dem Messbügel (12) und der optischen Komponente (9) festgestellt wird, **dadurch gekennzeichnet, dass** die optisch wirksame Komponente (9) spielfrei, aber drehbar mit einem höhenverstellbaren und mit einer ersten Skala versehenen Einsatz (7) in den Steuerkopf (1) befestigt wird, das Querhaupt (14) mit einer horizontalen Markierung (18) und einer mittigen horizontalen zweiten Skala (17) versehen ist, das Querhaupt mit einer optisch wirksamen Oberfläche (16) versehen ist, deren Abstand von einer parallel zu dieser Oberfläche durch die Mitte der Aufnahmebohrung (5) verlaufenden Ebene (20) definiert ist, die optische Komponente (9) mit einer Markierung versehen ist, die eine mechanische Abstandsmessung zu einer Markierung (18) des Messbügels (12) erlaubt und deren Abstand zur optischen Achse (10) des Strahlengangs definiert ist, der Abstand der horizontalen Markierung (18) auf dem Querhaupt (14) des Messbügels (12) von der Mittenachse der Aufnahmebohrung (5) definiert ist und dass unter Verwendung der definierten konstanten Abmessungen mit mechanischen Messungen und optischen Bestimmungen die für die Vermessung benötigte Parameter ermittelt werden.

2.  Verfahren nach Anspruch 1, **dadurch gekennzeichnet, dass** die optisch wirksame Komponente (9) in oder an einem Steuerkopf (1) des Zweiradrahmens befestigt ist.

3.  Verfahren nach Anspruch 1 oder 2, **dadurch gekennzeichnet, dass** die Messungen Längenmessungen sind.

4.  Verfahren nach einem der Ansprüche 1 bis 3, **dadurch gekennzeichnet, dass** der Strahlengang durch ein als optische Komponente eingesetztes Fernrohr (9) definiert wird, das auf unterschiedliche Entfernungen fokussierbar ist.

5.  Verfahren nach Anspruch 4, **dadurch gekennzeichnet, dass** das Fernrohr (9) mit einem Fadenkreuz ausgestattet ist.

6.  Verfahren nach einem der Ansprüche 1 bis 4, **dadurch gekennzeichnet, dass** der Strahlengang von einer Laserquelle ausgeht.

7.  Verfahren nach Anspruch 6, **dadurch gekennzeichnet, dass** als Laserquelle ein Strich- oder Kreuzlaser verwendet wird.

8.  Verfahren nach einem der Ansprüche 1 bis 7, **dadurch gekennzeichnet, dass** die zweite Skala (17) mit einem verschiebbaren Nonius (21) ausgebildet wird und dass der verschiebbare Nonius (21) mit einer Kreuzmarkierung (23) versehen wird.

9.  Verfahren nach einem der Ansprüche 1 bis 8, **dadurch gekennzeichnet, dass** zur Bestimmung der Rahmenlänge (RL) und des Rahmenwinkels (RW) der von der optischen Komponente (9) ausgehende Strahlengang auf die optisch wirksame Oberfläche (16) gerichtet wird und der Auftreffpunkt des von der optisch wirksamen Oberfläche (16) reflektierten Strahls auf der ersten Skala abgelesen und in Verbindung mit der mechanischen Längenmessung zwischen der Markierung der optischen Komponente (9) und der horizontalen Markierung (18) des Messbügels (12) ausgewertet wird.

10. Verfahren nach einem der Ansprüche 1 bis 9, **dadurch gekennzeichnet, dass** zur Bestimmung der Sturzabweichung die optische Komponente auf beiden Seiten des Messbügels (12) durch eine Höheneinstellung der optischen Komponente (9) auf die horizontale Markierung (18) gerichtet wird und dass die jeweilige Höheneinstellung auf der ersten Skala abgelesen und die Differenz in bezug zum Abstand der Messpunkte voneinander gesetzt wird.

11. Verfahren nach einem der Ansprüche 1 bis 10, **dadurch gekennzeichnet, dass** zur Bestimmung eines Lenkkopfversatzes (LKV) eine Mittenabweichung (MA) des Nullpunkts der zweiten Skala (17) ermittelt wird, indem die optische Komponente (9) auf die Mitte der ersten Skala und anschließend durch Höhenverschieben der optischen Komponente auf die zweite Skala (17) gerichtet und der Auftreffpunkt auf der zweiten Skala (17) abgelesen wird und dass der abgelesene Wert durch eine Messung der außermittigen Befestigung des Messbügels (12) und unter Berücksichtigung einer festgestellten Sturzabweichung korrigiert wird.

12. Messeinrichtung zur Vermessung eines Zweiradrahmens mit einem in einer senkrecht zur Längsachse stehenden Aufnahmebohrung (5) zentrierbaren und in einer festen Winkellage fixierbaren, im wesentlichen U-förmigen Messbügel (12) aus zwei Schenkeln (13) und einem oberen Querhaupt (14) und mit einer in einer definierten Position relativ zur Lenkachse (2) des Zweiradrahmens befestigten optisch wirksamen Komponente (9) zur Ausbildung eines Strahlengangs zwischen dem Messbügel (12) und der optisch wirksamen Komponente (9) **dadurch gekennzeichnet, dass** die optisch wirksame Komponente (9) spielfrei, aber drehbar mit einem höhenverstellbaren und mit einer ersten Skala versehenen Einsatz (7) befestigt wird, das Querhaupt (14) mit einer horizontalen Markierung (18) und einer mittigen horizontalen zweiten Skala (17) versehen ist, das Querhaupt mit einer optisch wirksamen Oberfläche (16) versehen ist, deren Abstand von einer parallel zu dieser Oberfläche durch die Mitte der Aufnahmebohrung (5) verlaufenden Ebene (20) definiert ist, die optische Komponente (9) mit einer Markierung versehen ist, die eine mechanische Abstandsmessung zu einer Markierung (18) des Messbügels (12) erlaubt und deren Abstand zur optischen Achse (10) des Strahlengangs definiert ist, der Abstand der horizontalen Markierung (18) auf dem Querhaupt (14) des Messbügels (12) von der Mittenachse der Aufnahmebohrung (5) definiert ist.

13. Messeinrichtung nach Anspruch 12, **dadurch gekennzeichnet, dass** die optisch wirksame Komponente (9) in oder an einem Steuerkopf (1) des Zweiradrahmens befestigt ist.

14. Messeinrichtung nach Anspruch 12 oder 13, mit einem Fernrohr (9) als optisch wirksame Komponente.

15. Messeinrichtung nach Anspruch 14, **dadurch gekennzeichnet, dass** das Fernrohr mit einem Fadenkreuz ausgestattet ist.

16. Messeinrichtung nach Anspruch 12 oder 13, mit einer Laserquelle als optisch wirksame Komponente.

17. Messeinrichtung nach Anspruch 16, **dadurch gekennzeichnet, dass** die Laserquelle ein Strich- oder Kreuzlaser ist.

18. Messeinrichtung nach einem der Ansprüche 12 bis 17, **dadurch gekennzeichnet, dass** die zweite Skala (17) mit einem verschiebbaren Nonius (21) ausgebildet ist und dass der verschiebbare Nonius (21) mit einer Kreuzmarkierung (23) versehen ist.

19. Messeinrichtung nach einem der Ansprüche 12 bis 18, **dadurch gekennzeichnet, dass** an der optischen Komponente (9) eine weitere Markierung vorgesehen ist, die sich in einem definierten Abstand zum Nullpunkt der ersten Skala (NPFS) befindet und deren Abstand zur optischen Achse (10) in Richtung der ersten Skala definiert ist.

Fig. 1

Fig. 2

Fig. 3

Fig. 4

EP 1 281 932 A2

EP 1 281 932 A2

Fig.5